# EUROPEAN PATENT APPLICATION

(11) **EP 2 000 424 A2**
(43) Date of publication of application: **10.12.2008**
(21) Application number: 07738661.3
(22) Date of filing: 15.03.2007
(51) Int. Cl.: B65G 1/06, A61J 3/00

(54) **MEDICINE CART**

(30) Priority: 27.03.2006 JP 2006085533
(71) Applicant: Yuyama Mfg. Co., Ltd., Toyonaka-shi, Osaka 561-0841 (JP)
(72) Inventor: YUYAMA, Shoji, Toyonaka-shi, Osaka 561-0841 (JP)
(74) Representative: HOFFMANN EITLE
(86) International application number: PCT/JP2007/055211
(87) International publication number: WO 2007/111142

(57) **Abstract**

A medicine cart exhibiting good workability at the time of filling medicine and returning medicine. Provided is a medicine cart (1) including a cassette (10) which is upwardly open and accommodating a plurality of medicines in an upright state in a row; a shelf plate (8) on which a plurality of the cassettes (10) are placed and which can be drawn out of a main body (3) of the medicine cart (1); and a pressing member (47) provided in the cassette (10) and adapted to forwardly press a rearmost medicine, in which a locking means (61) for locking the pressing member (47) at a predetermined position in the cassette (10), and an unlocking means (62,63) for canceling the lock of the pressing member (47) by the locking means (61) through pushing-in operation and drawing-cut operation of the shelf plate (8) are provided.

## Description

### Technical Field

The present invention relates to a medicine cart having a large number of cassettes each of which stores a plurality of medicines arranged in an upright state in a row and which are respectively provided for different types of medicines, and allowing taking out or returning of medicines required at a hospital or the like one by one starting from the foremost one and also allowing calculation of the quantity of medicines taken out and stock control thereof.

### Background Art

As an example of this type of medicine cart, Patent Documents 1 and 2 propose a medicine storage device in which a cassette which is inclined, with the taking-out side thereof facing downward, stores a plurality of medicines arranged in a row, in which the medicines are biased forwards by a weight that is in contact with the rearmost medicine, and which allows the medicines to be taken out or returned one by one through an entrance/exit provided in a corner of the front end of the cassette.

Patent Document 3 proposes a device in which a plurality of ampoules are accommodated in a row in a shelf portion, in which the rearmost ampoule is followed by a linear movement member, and in which the linear motion of the linear movement member is converted to a rotary motion, with the number of accommodated ampoules being counted based on the rotational displacement thereof.

Further, Patent Document 4 also proposes a device in which, as in Patent Documents 1 through 3, ampoules are placed in a row in a medicine placing portion and biased forwardly by a pressing member.
Patent Document 1: JP 2001-198194 A
Patent Document 2: JP 2001-258994 A
Patent Document 3: JP 2005-280971 A
Patent Document 4: JP 2005-330048 A

### Disclosure of the Invention

### Problem to be solved by the Invention

However, in the devices of Patent Documents 1, 2, and 3, it is necessary for the operator to charge the ampoules one by one while pressing by hand the biasing member against the biasing force, resulting in a rather poor workability in charging operation. In the device of Patent Document 4, the surface of the pressing member facing the medicine is formed so as to be curved and away from the ampoules as it extends upwardly, whereby the ampoule inserting operation is smoothed; however, the difficulty of charging the ampoules one by one while pressing the biasing member against the biasing force is not eliminated.

The present invention has been made in view of the aforementioned problem. It is accordingly an object of the present invention to provide a medicine cart which is free from the difficulty in filling it with medicines and which is of excellent workability.

### Means for solving the Problems

In order to solve the aforementionedproblem, the present invention provides a medicine cart including: a cassette which is upwardly open and accommodating a plurality of medicines in an upright state in a row; a shelf plate on which a plurality of the cassettes are placed and which can be drawn out of a main body of the medicine cart; and a pressing member provided in the cassette and adapted to forwardly press a rearmost medicine, in which a locking means for locking the pressing member at a predetermined position in the cassette, and an unlocking means for canceling the lock of the pressing member by the locking means through pushing-in operation and drawing-out operation of the shelf plate are provided.

In the above solving means, when the shelf plate is drawn out, the pressing member can be locked at a predetermined position by the locking means. Since the unlocking means cancels the lock of the pressing member conducted by the locking means through pushing-in motion of the shelf member, there is no need to perform any special lock canceling after the completion of the medicine charging operation.

It is desirable for the lockingmeans to include a locking lever rotatably provided on the cassette, and for the locking lever to be provided with a claw to be locked to the pressing member, with the claw being biased in a direction to be locked to the pressing member.

It is desirable for the locking lever of each cassette to be fixed to a common spindle and rotatable around the common spindle. This helps to eliminate the need for provision of a spindle for each cassette, and further, since it is only necessary to rotate a single locking lever, it is possible to realize a simple construction.

It is desirable for the unlocking means to include an unlocking lever which is rotatably provided on the shelf plate and adapted to rotate the locking lever against a biasing force to cancel the engagement of the claw of the locking lever and the pressing member, and an unlocking member which is provided on the main body of the medicine cart and adapted to be locked to the unlocking lever of at least one cassette at the time of pushing-in and drawing-out of the shelf plate.

It is desirable for the unlocking lever to include an engagement portion to be engaged with the unlocking member and an operating portion abutting the locking lever to operate the locking lever.

It is desirable for the engagement portion of the unlocking lever to extend downwards from the spindle of the unlocking lever, with the operating portion extending horizontally on both sides from the spindle of the locking lever. With this construction, whether the unlocking pin is engaged with the engagement portion from the pushing-in side or from the drawing-out side, the operating portion rotates, enabling the locking lever to operate.

It is desirable for the unlocking member to include a first unlocking member provided on the front side portion of the main body and a second unlocking member provided on the rear side portion thereof. With this construction, when the shelf plate is pushed in, the unlocking lever immediately abuts the first unlocking member to cancel the lock, and hence the row of medicines in alignment are not disturbed or the rearmost medicine does not topple down.

It is desirable for the unlocking member to include a pin. Instead, it may also be a plate-like projecting member, or a substitute such as a screw or the like.

The unlocking member may be an unlocking bar having at both ends thereof a first unlocking end provided at a front side portion of the main body and a second unlocking end provided at a rear side portion of the main body.

### Effects of the Invention

According to the present invention, there are provided a locking means and an unlocking means for the pressing member, and hence, by locking the pressing member at a predetermined position, there is no need to charge medicines while pressing the pressing member against the biasing force, making it possible to perform medicine charging operation easily and quickly. Further, it is also possible to charge a plurality of medicines at the same time. Since the locking means is unlocked with the pushing-in operation and the drawing-out operation of the shelf plate, there is no need to perform any special canceling operation after the completion of the medicine charging operation, whereby the difficulty in charging medicine is eliminated, and an improvement in terms of workability is achieved.

Hereinafter, an embodiment of the present invention are described with reference to the accompanying drawings.

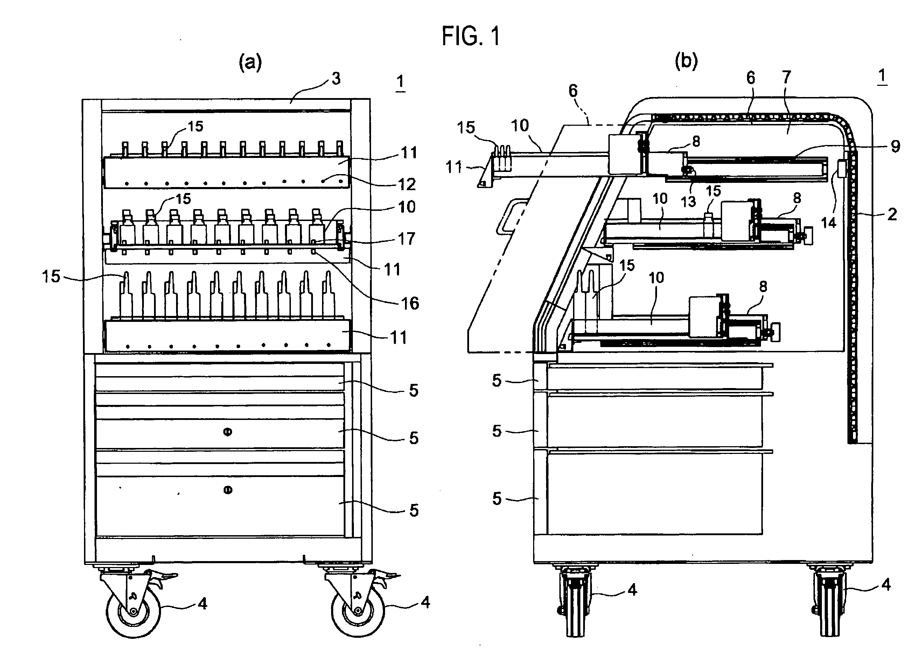

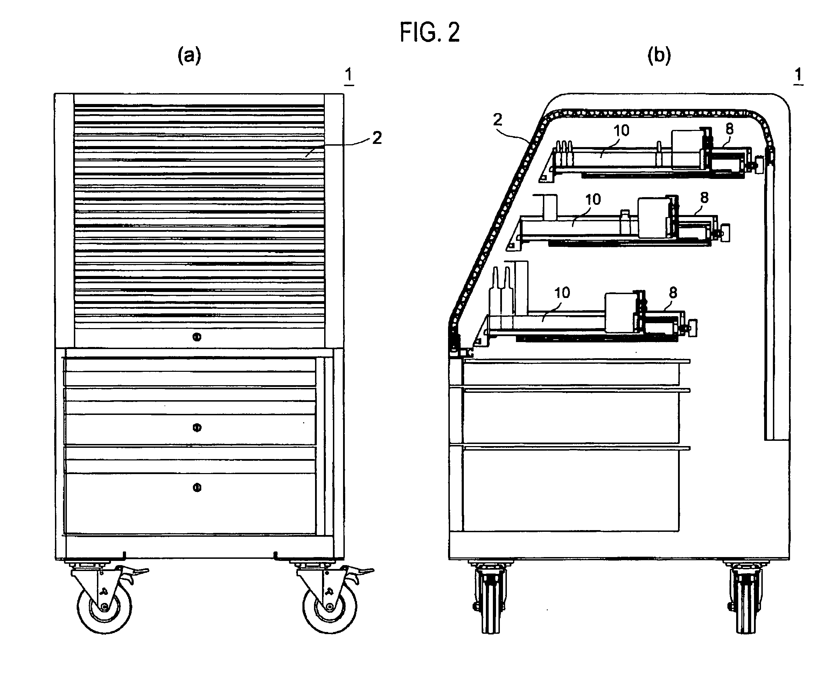

Figs. 1 are an elevation view and a side sectional view of a medicine cart 1 according to the present invention, and Figs. 2 are an elevation view and a side sectional view of the medicine cart 1 of Fig. 1 with a shutter 2 thereof closed.

The medicine cart 1 has a main body 3 formed in a box-like shape and having a front surface thereof open. The lower half part of the front surface of the main body 3 is oriented perpendicularly, and the upper half part thereof is inclined rearward. On the bottom surface of the main body 3, four casters 4 are provided so that the medicine cart 1 is movable. To the lower half part of the main body 3, three drawer bodies 5 are so provided vertically as to be drawable forward. In these drawer bodies 5, different types of supplies are stored. The opening in the front surface of the upper half part of the main body 3 is closable by the shutter 2 as shown in Fig. 2. To the upper half part of this main body 3, a drawing rack 6 is so provided as to be drawable forward.

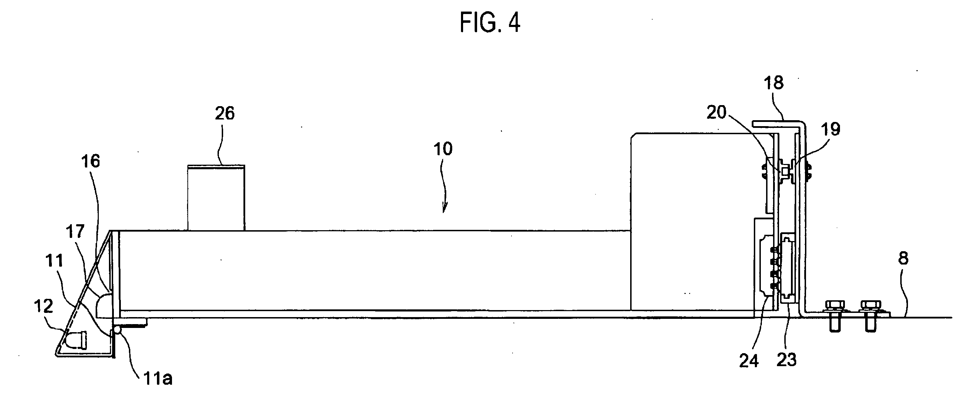

The aforementioned drawing rack 6 includes side plates 7 on the right and left sides and shelf plates 8 provided vertically in three steps. Each shelf plate 8 is so supported as to be drawable forward along a slide rail 9 provided on the side plate 7 on the right and left sides. The front ends of the shelf plates 8 provided vertically in three steps are arranged in a step-like manner so that the one in the first step is located more forward while those in the second and third steps are shifted more rearward at more upward position from the second to the third levels. On the top surfaces of the shelf plates 8, a plurality of cassettes 10 are arranged respectively. To the front end of each shelf plate 8, as shown in Fig. 4, a front panel 11 is so fitted as to be rotatable about a spindle 11a between the upright position (see the cassettes 10 in the first and third steps of Fig. 1(b)) and the horizontal position (see the cassette 10 in the second step of Fig. 1(b)). To the front panel 11, an LED12 is provided at a position facing the cassette 10. To the rear end of each shelf plate 8, a catch 13 is provided, which engages with a catch receiver 14 provided to the side plate 7 when the shelf plate 8 is pressed in to thereby prevent the shelf plate 8 from improperly dropping out due to shock or the like.

The respective cassettes 10 of the shelf plates 8 store different types of medicines (ampoules in this embodiment) 15 and thus have different sizes depending on the medicines 15 to be stored, though their basic structure are the same. Hereinafter, a description is given, referring to any one of the cassettes 10.

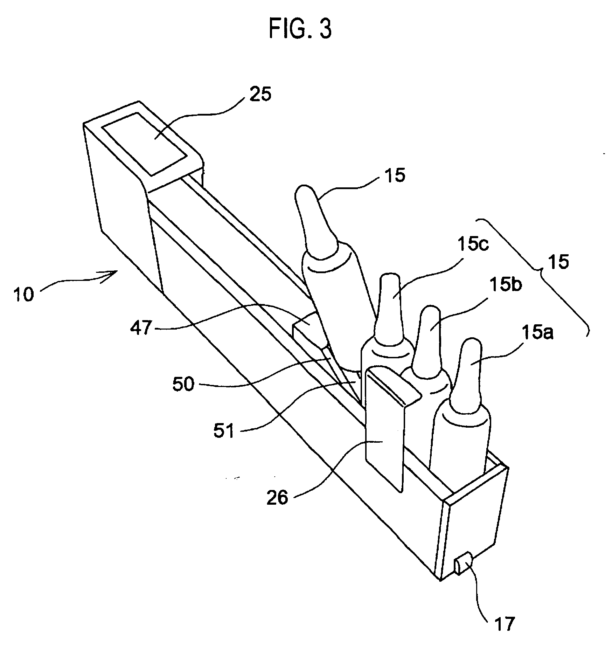

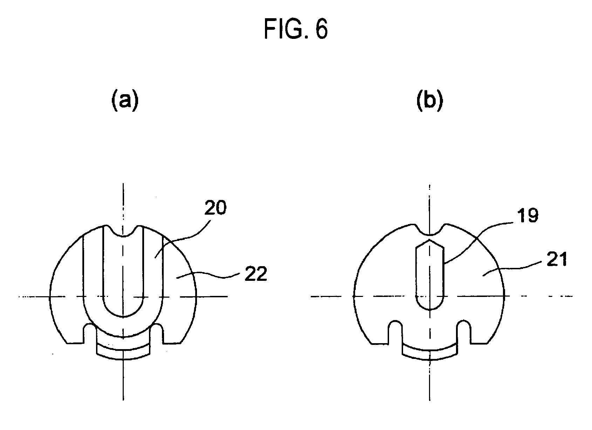

As shown in Fig. 3, the cassette 10 has an anteroposteriorly long box shape with the upper side thereof opening and is capable of storing the medicines 15 arranged in a row. The rear portion of the cassette 10 is formed higher than the full portion thereof. On the front end surface of the cassette 10, as shown in Fig. 4, there is formed a projection 17 which engages with a hole 16 provided in the rear surface of the front panel 11. On the rear end surface of the cassette 10, there is provided a pin receiver 20 which engages with a pin 19 of a cassette fitting stay 18 vertically provided to the shelf plate 8. The pin 19 has, as shown in Fig. 6(b), an oval cross section provided at a position biased from the fitting center of a base 21 thereof. The pin receiver 20 has, as shown in Fig. 6(a), a U-shaped cross section provided at a position biased from the fitting center of a base 22 thereof. The pin 19 and the pin receiver 21 can be fitted in ten levels at a fitting angle of 36 degrees, and hence improper fitting can be prevented by fitting each cassette 10 at a different angle. The pin 19 and the pin receiver 20 can be provided not only in one pair, but also in two or more pairs. On the rear end of the cassette 10 below the pin receiver 20, there is provided a cassette side connector 24 which is electrically connected to a shelf side connector 23 provided to the cassette fitting stay 18. The top surface of the rear portion of the cassette 10 is covered by a transparent cover 25, on which the name and a photo of the medicine to be stored in this cassette 10 are displayed. To the side surface of the front portion of the cassette 10, a coming-out preventing member 26 is fitted which is formed in the shape of an inverted L and which covers the upper portion including from the medicine 15a at the forefront to the shoulder part (if there is no shoulder part, a head part may be applied) of the medicine 15b at the second position that are both stored in the cassette 10.

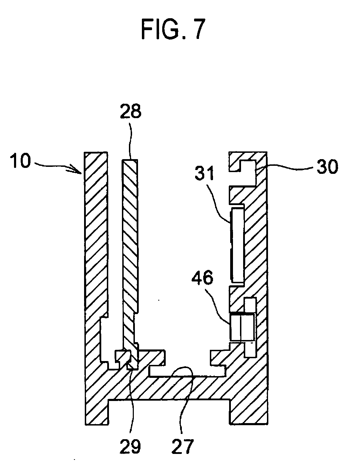

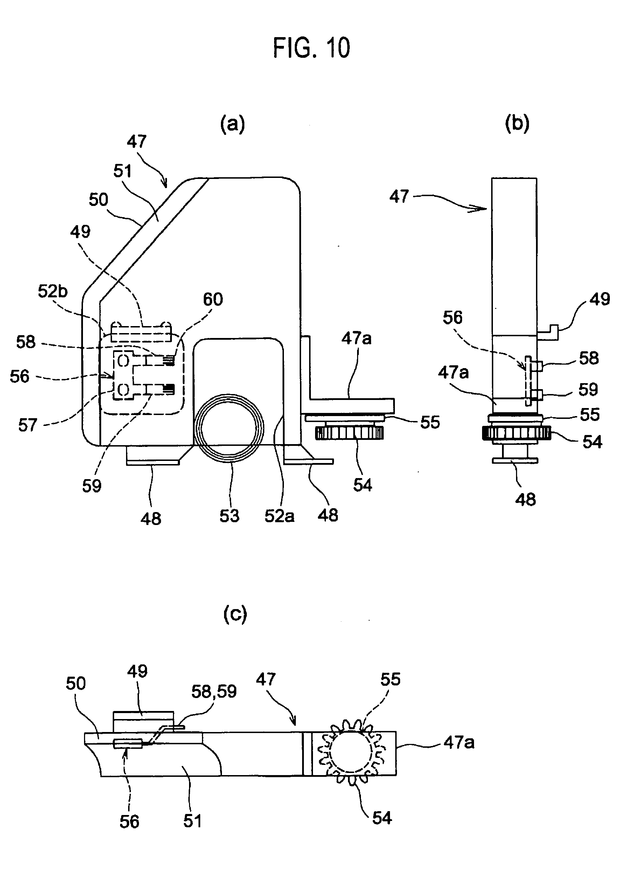

On the inner bottom surface of the cassette 10, as shown in Fig. 7, there are formed a slide groove 27 on which a band plate of a constant force spring 54 of Fig. 10 to be described below is disposed and with which a pressing member 47 slidably engages; and a spacer fitting groove 29 which is fitted with a spacer 28 for adjusting the inner width of the cassette 10 in accordance with the size of the medicine 15. On the inner side surface of the cassette 10, a vibration-preventing rail 30 is formed with which a vibration-preventing boss 49 of the pressing member 47 engages. Below the vibration-preventing rail 30, a slide resistance unit 31 and a rack gear 46 are so fitted as to extend anteropoteriorly.

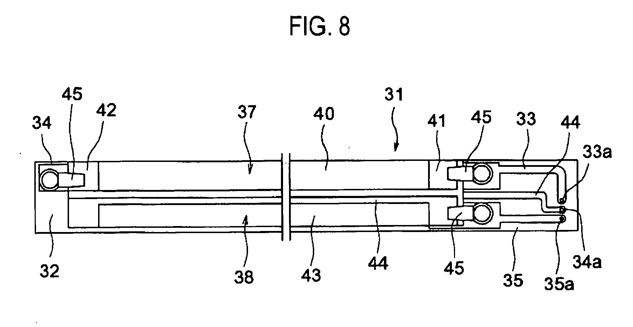

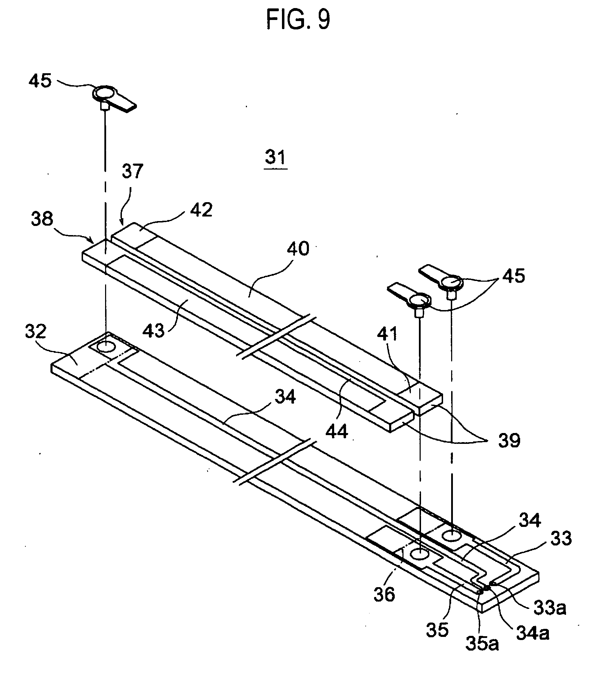

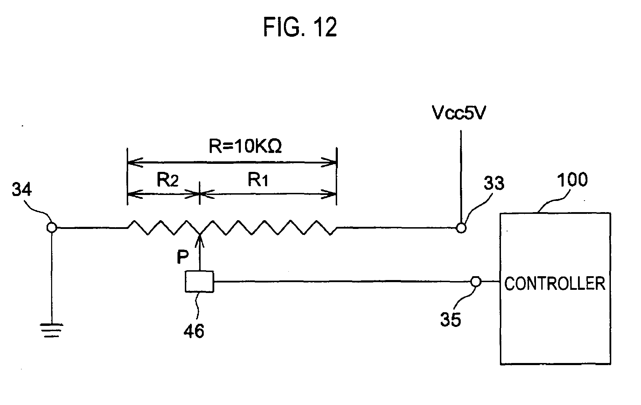

The slide resistance unit 31, as shown in Figs. 8 and 9, has an insulating substrate 32 which is formed in an elongated rectangular shape and on one end of which a positive side conductive pattern 33, a negative side conductive pattern 34, and a detection side conductive pattern 35 are disposed. The negative side conductive pattern 34 extends to the other end of the substrate 32. On the conductive patterns 33, 34, and 35 of the substrate 32, two elongated first and second slide resistance plates 37 and 38 are attached in parallel by a two-sided tape 36. The first slide resistance plate 37 has a resistive paste 40 exposed on a Mylar film 39 with silver pastes 41 and 42 further exposed on both ends thereof. The resistive paste 40 between the silver pastes 41 and 42 has a resistance of 10Ω. Similarly, the second slide resistance plate 38 has a resistive paste 43 exposed on the Mylar film 39 with a silver paste 44 exposed on the one end portion to the other end portion through one of side edge portions. The silver paste 41 at one end of the first slide resistance plate 37 is connected to the positive side conductive pattern 33 via a metal fitting 45, and the silver paste 42 at the other end thereof is connected to the negative side conductive pattern 34 via the metal fitting 45. The silver paste 44 of the second slide resistance plate 38 is connected to the detection side conductive pattern 35 via a metal fitting 45. The positive side conductive pattern 33 of this slide resistance unit 31 is connected, as shown in Fig. 12, to a Vcc terminal of 5V having a constant-voltage power supply, the negative side conductive pattern 34 is grounded, and the detection side conductive pattern 35 is connected to a detection terminal of a controller 100.

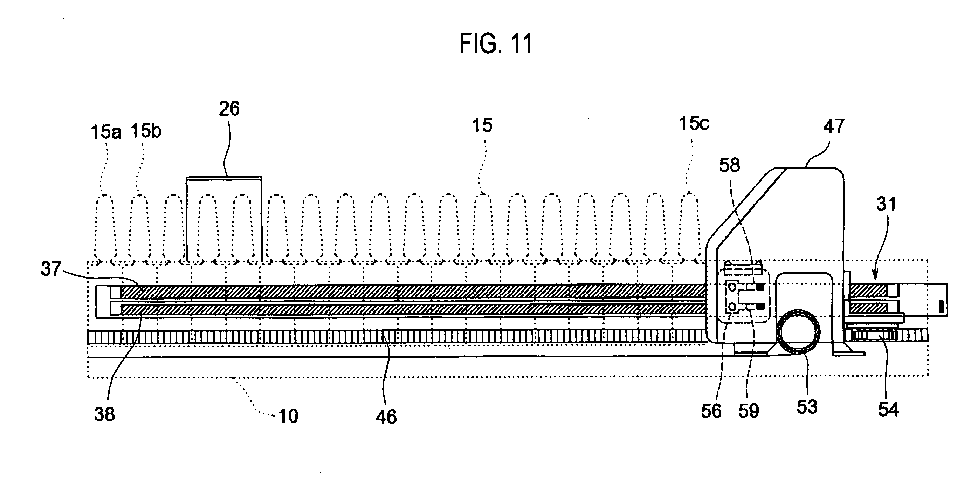

The medicine 15 stored and arranged in a row in the cassette 10 is pressed forward by the pressing member 47. The pressing member 47 is, as shown in Fig. 10, formed in the shape of a rectangular plate, on the bottom surface of which an engaging projection 48 for engaging with the slide groove 27 of the aforementioned cassette 10 is formed and on the side surface of which the vibration-preventing boss 49 for engaging with the vibration-preventing rail 30 of the cassette 10 is formed. The upper corner at the front end of the pressing member 47 is cut diagonally, forming an inclined surface 50. On this inclined surface 50, an insert guide part 51 is formed which is made of a surface formed in the shape of a circular arc as viewed from the direction in which the medicine is inserted. The angle of the inclined surface 50 is set so that the medicine 15 makes contact with the insert guide part 51 without fail when inserted from the above. The circular arc-shaped surface of the insert guide part 51 has a radius of curvature larger than the radius of the medicine 15. The insert guide part 51 continues to the front end surface of the pressing member 47. On the bottom of the pressing member 47, a depression 52a is formed which stores a constant force spring 53. The constant force spring 53 includes a longbandplatewoundaround. When leading end thereof is pulled out, it is restored with a certain magnitude of force. Therefore, Conston (Registered trademark) or the like that is commercially available is used. The band plate of the constant force spring 53 is, as shown in Fig. 11, disposed along the slide groove 27 of the cassette 10, with the leading end thereof fixed to the front end of cassette 10. To a projection 47a formed in the shape of an L and provided on the rear end surface of the pressing member 47, there are provided a pinion gear 54 which engages with the rack gear 46 of the aforementioned cassette 10 and an oil damper 55 which is coupled with the pinion gear 54. Load is imposed on the pinion gear 54 during rotation under the action of the oil damper 55. This permits preventing occurrence of problems such as that the pressing member 47 suddenly moves to hit the stored medicine 15 under influence of a biasing force of the constant force spring 53.

Below the vibration-preventing boss 49 on the side surface of the pressing member 47, a depression 52b is formed, to which a pair of brushes 56 are fitted which makes sliding contact with the aforementioned slide resistance unit 31. This brush 56 includes a plate-like base 57 formed of an electric conductor and sliding parts 58 and 59 of conductive and elastic bodies fitted to the base 57 in parallel to each other. This brush 56 is designed such that fitting the base 57 to the pressing member 47 as shown in Fig. 11 causes the leading end portions of the sliding parts 58 and 59 to slidably make pressure contact with the first and second slide resistance plates 37 and 38 of the slide resistance unit 31. The sliding parts 58 and 59 each have a notch 60 formed on the leading ends thereof so as to make contact evenly with the slide resistance plates 37 and 38 even when inclined to some degree.

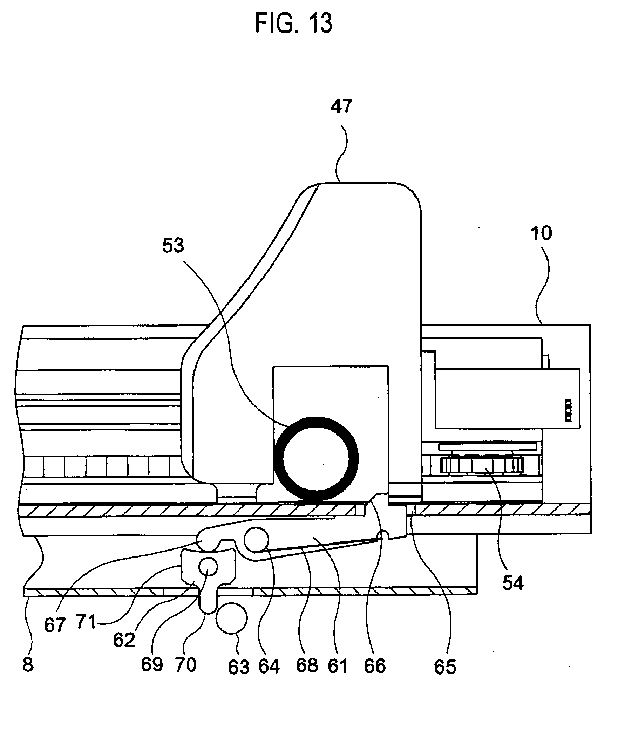

As shown in Figs. 13, 14, and 15, each cassette 10 is provided with a locking lever 61 serving as a locking means, and an unlocking lever 62 and an unlocking pin 63 serving as unlocking means.

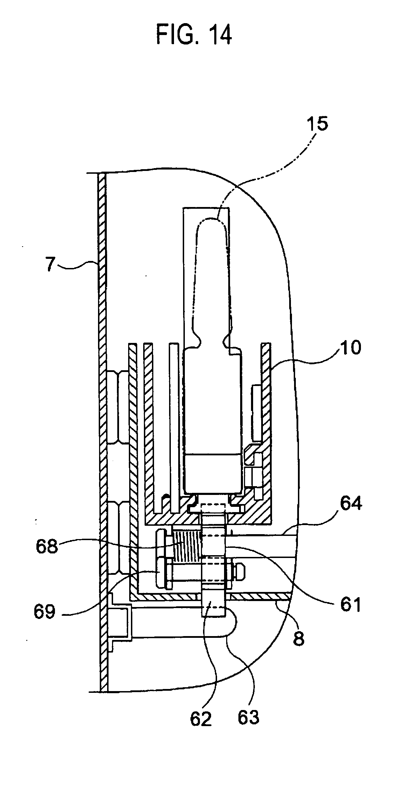

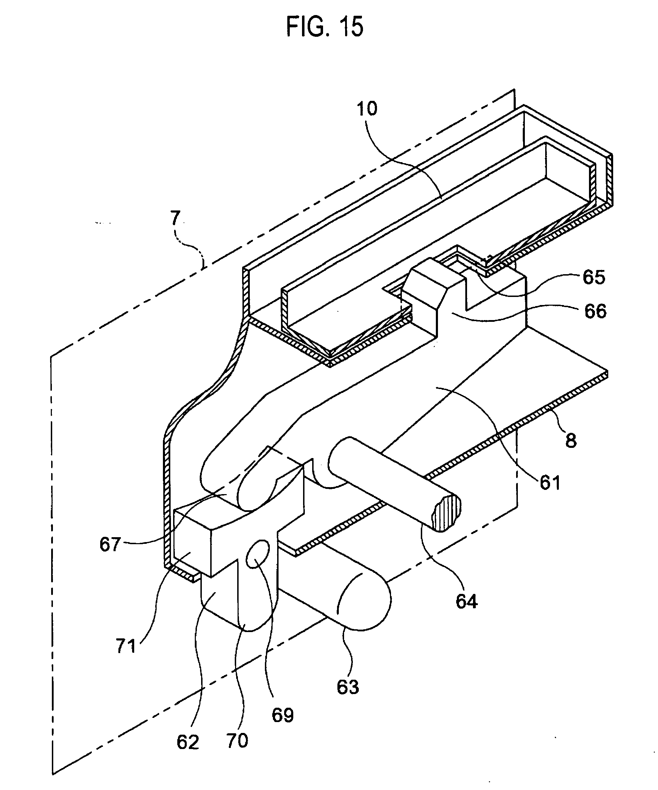

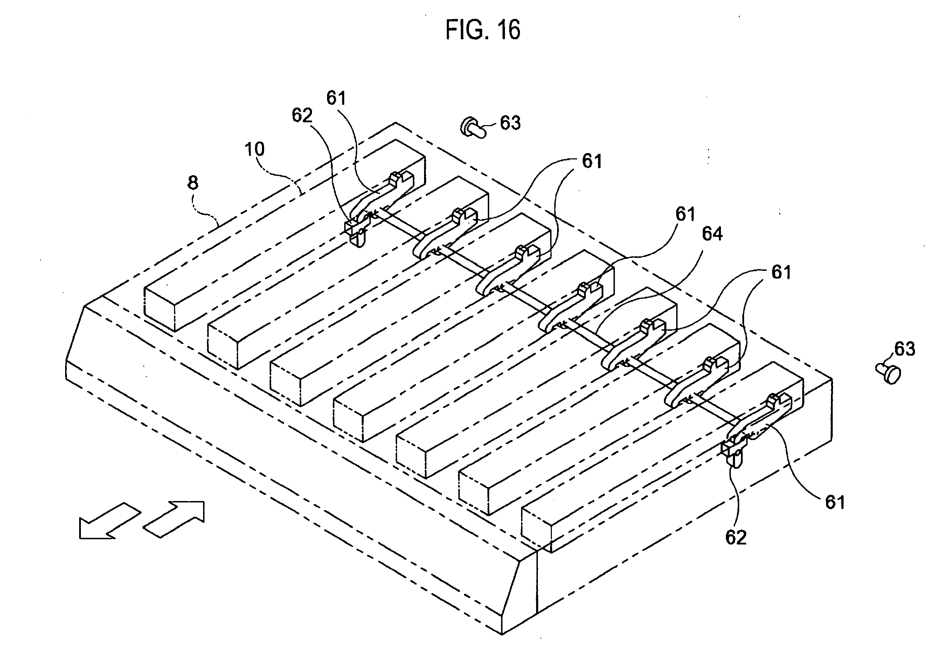

As shown in Fig. 16, the locking lever 61 is fixed to a common spindle 64 extending horizontally below the cassette 10 between both side walls of the shelf plate 8 so as to be rotatable. As shown in Fig. 15, on the upper surface of one end portion of the locking lever 61 extending in the pushing-in direction of the shelf plate 8, there is formed a claw 66 facing the interior of the cassette 10 through a hole 65 provided in the bottom wall of the cassette 10, and, on the other end portion thereof extending in the pushing-in direction of the shelf plate 8, there is formed a columnar protrusion 67 parallel to the common spindle 64. Due to a torsion spring 68 shown in Fig. 14, the claw 66 of the locking lever 61 protrudes into the cassette 10 through the hole 65, and is biased so as to be engaged with the lower surface of the pressing member 47.

The unlocking lever 62 is mounted to both side walls of the shelf plate 8 so as to be rotatable around a spindle 69 protruding parallel to the common spindle 64. The unlocking lever 62 includes an engagement portion 70 extending vertically downwards from the spindle 69, and an operating portion 71 extending from the upper portion of the spindle 69 in the drawing-out direction and the pushing-in direction of the shelf plate 8, and when seen along the spindle 69, it exhibits a substantially T-shaped configuration. The upper surface of the operating portion 71 constitutes a concave surface that is in contact with the columnar protrusion 67 of the locking lever 61 provided below each of the cassettes 10 situated at both ends.

The unlocking pin 63 protrudes from the rear side (pushing-in side) portion of each of both side plates 7 in a columnar form, and when the shelf plate 8 is pushed in, it can be engaged with the engagement portion 70 of the unlocking lever 62.

It is not always necessary for the locking lever 61 to be supported by the common spindle 64, and it may also be provided separately. In this case, the unlocking lever 62 is provided for each locking lever 61, and the unlocking pin 63 is also provided for each locking lever 61. The unlocking pin 63 is not restricted to a columnar one, and it may also be a plate-like one or a substitute such as a screw.

In the medicine cart 1 structured as described above, to store the medicine 15, the front panel 11 is opened to take out the cassette 10 from the shelf plate 8, the pressing member 47 is moved rearward, and a given number of medicines 15 are stored between the pressing member 47 and the front end of the cassette 10. The medicines 15 are pressed forward by the pressing member 47.

When the cassette 10 is fitted to the shelf plate 8, the cassette side connector 24 and the shelf side connector 23 electrically contact with each other, whereby a voltage is supplied from the shelf plate 8 side to the slide resistance unit 31 of the cassette 10. The brush 56 of the pressing member 47 slides on the first and second slide resistance plates 37 and 38, and stops at a position in accordance with the quantity of the medicines 15. Where the stop position of the brush 56 is P, as shown in Fig. 12, a partial pressure ofVp=R2/R is inputted to the controller 100 via the brush 56 located at the P position. The controller 100 reads out voltage or processing conditions stored in a storage device, and a processor calculates the quantity of medicines corresponding to the detected voltage and outputs the results as the current quantity of medicines.

Based on prescription information transmitted from a host computer when the medicine cart 1 is connected to the host computer, or based on prescription information inputted with a bar code reader or a keyboard when the medicine cart 1 is stand alone, the LED12 of the front panel 11, which corresponds to the cassette 10 storing the medicines 15 required for prescription, lights up or blinks. Note that the LED12 also lights up or blinks when the medicines 15 are out of stock.

The medicine 15 may be taken out by holding and lifting upward the medicine 15a at the forefront of the cassette 10. In this operation, the medicine 15b at the second position may come out together with the medicine 15a at the forefront due to friction, but the medicine 15b at the second position hits the coming-out preventing member 26 to be thereby prevented from coming out. When the medicine 15a at the forefront is taken out, the row of the medicines 15 is pressed forward by the pressing member 47, and hence the medicine 15b located at the second position is placed at the forefront. In this manner, the required quantity of medicines 15 can be taken out sequentially. The shelf plates 8 provided vertically in three steps are arranged in the step-like manner so that they are shifted more rearward at more upward position from the first, the second, to the third steps. Thus, when the medicine 15 is to be taken out from the cassette 10 of the shelf plate 8 located at the first step at the bottom, the shelf plate 8 at the second step does not get in the way.

When a wrong medicine 15a is taken out or when an extra medicine 15a is taken out, this medicine 15a needs to be returned to the cassette 10. In this case, as shown in Fig. 3, by pressing the bottom of the medicine 15 along the insert guide part 51 of the pressing member 47, the medicine 15 is inserted between the medicine 15c at the rearmost and the pressing member 47 to be thereby located at the rearmost.

In this manner, the aforementioned medicine cart 1 is capable of reliably taking out the medicines 15 one by one and also capable of easily returning the medicine 15a once taken out to the cassette 10, thereby providing the excellent workability at the time of filling and returning the medicine 15.

While in the aforementioned case each cassette 10 is extracted from the shelf plate 8 to accommodate the medicines 15, it is also possible to accommodate the medicines 15 in each cassette 10 in a collective manner by drawing out the shelf plate 8 from the main body 3.

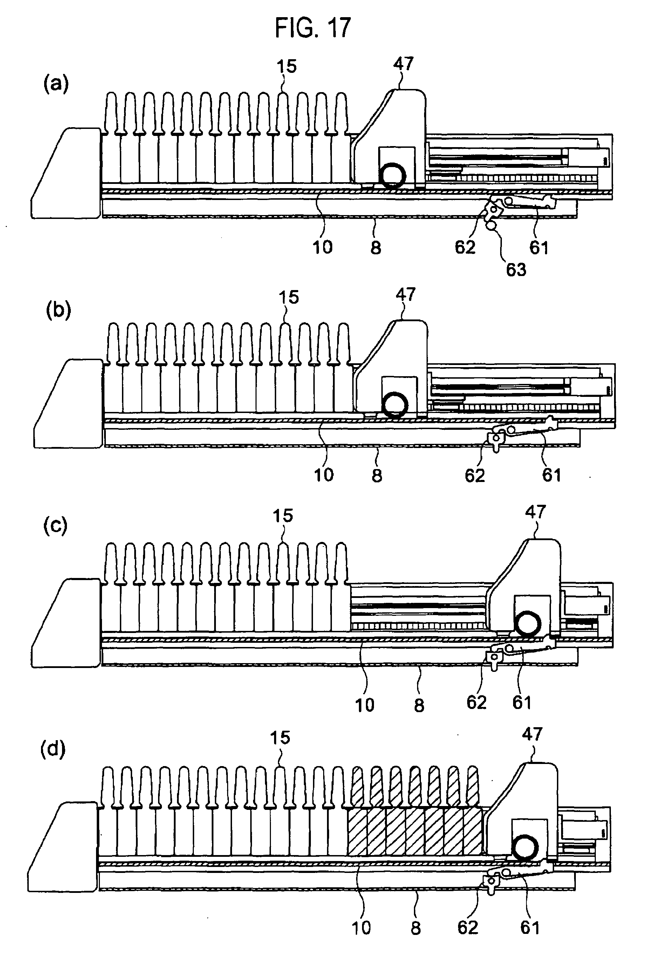

That is, as shown in Fig. 17(a), in the state in which the shelf plate 8 has been inserted into the main body 3, the engagement portion 70 of the unlocking lever 62 abuts the unlocking pin 63 and rotates clockwise, with the end portion of the operating portion 71 pushing up the protrusion 67 of the locking lever 61. As a result, the locking lever 61 rotates clockwise against the biasing force, and the claw 66 is retracted from the hole 65 of the cassette 10. As a result, the pressing member 47 moves forwards, and presses the rearmost medicine 15 forwardly.

When, in this state, the shelf plate 8 is drawn out from the main body 3 for the purpose of replenishment or inspection of the medicines 15, the unlocking lever 62 is, as shown in Fig. 17(b), separated from the unlocking pin 63, and is freed from constraint. As a result, the locking lever 61 rotates counterclockwise due to the biasing force thereof, and the protrusion 67 thereof pushes down the operating portion 71 of the unlocking lever 62. As a result, the unlocking lever 62 rotates counterclockwise, and comes to a stop at the point in time when the protrusion 67 of the locking lever 61 comes to the center of the upper surface of the operating portion 71. The claw 66 of the locking lever 61 enters the hole 65 of the cassette 10. However, since the pressing member 47 has already moved forwards, the claw 66 is not engaged with the pressing member 47.

Next, of the cassettes 10 of the drawn-out shelf plate 8, the pressing member 47 of the cassette 10 in which the medicines 15 are to be accommodated is moved rearwards. When the pressing member 47 goes over the claw 66 of the locking lever 61 while pressing down the same, the claw 66 of the locking lever 61 is engaged with the pressing member 47 and locked as shown in Fig. 17(c).

In this way, the pressing member 47 is locked at a predetermined rear position, and hence it is possible to replenish the space between the rearmost medicine 15 and the pressing member 47 with medicines 15 easily and quickly without having to press the pressing member 47 against the biasing force as in the prior art, thus facilitating the replenishing operation.

When, as shown in Fig. 17(d), the shelf plate 8 with the cassette 10 replenished with the medicines 15 indicated by the hatched portion in the drawing is pushed into the main body 3, the engagement portion 70 of the unlocking lever 62 abuts the unlocking pin 63 and rotates clockwise, and the end portion of the operating portion 71 pushes up the protrusion 67 of the locking lever 61. As a result, the locking lever 61 rotates clockwise against the biasing force thereof, and the claw 66 retreats from the pressing member 47. As a result, the pressing member 47 presses the rearmost medicine 15, and normal taking-out operation of the medicine 15 becomes possible as shown in Fig. 17(a).

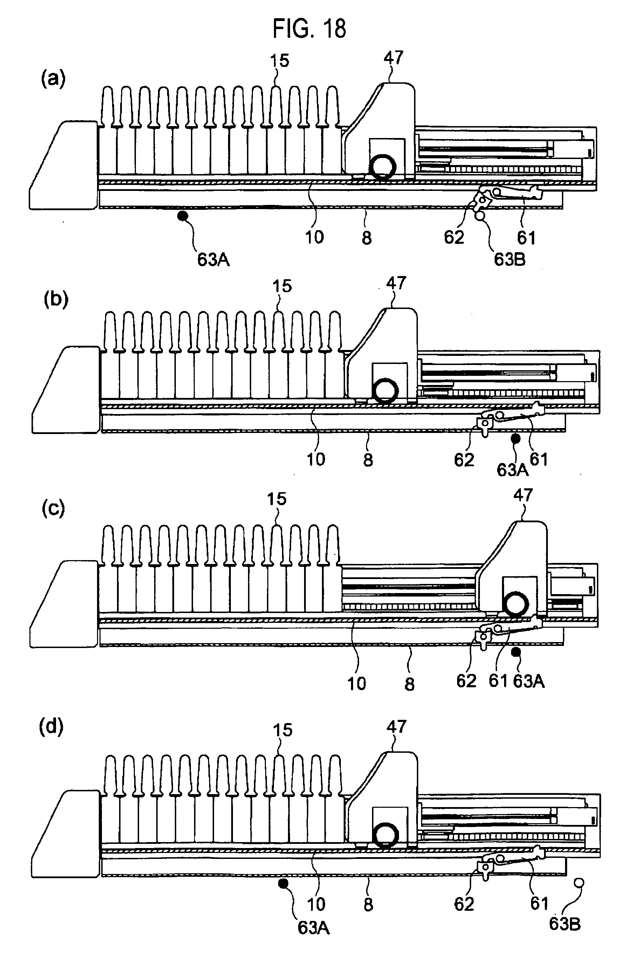

In Figs. 18(a) through 18(d), first and second unlocking pins 63A, 63B are provided at two positions of the front side (drawing-out side) portion and the rear side (pushing-in side) portion of the side plate 7 of the main body 3, respectively. In order to clearly distinguish the two unlocking pins from each other, the first unlocking pin 63A on the front side is filled in with black.

When the shelf plate 8 in the accommodated state shown in Fig. 18(a) is drawn out, the unlocking lever 62 goes over the first unlocking pin 63A on the front side and the state as shown in Fig. 18 (b) is attained. Here, as shown in Fig. 18(c), the pressing member 47 is moved rearwards to be locked. When, in this locked state, no medicine 15 is accommodated or filling with the medicines 15 is not effected, pushing the shelf plate 8 into the main body 3 causes the unlocking lever 62 to abut the first unlocking pin 63 on the front side and rotate, and hence the locking lever 61 rotates, and the lock of the pressing member 47 is canceled. As a result, the pressing member 47 moves forwards, and presses the rearmost medicine 15. In this way, by providing the unlocking pins 63A, 63B not only at the rear side portion but also at the front side portion of the side plate 7 of the main body 3, it is possible to cancel the lock of the pressing member 47 immediately after the pushing-in of the shelf plate 8, and it is possible to prevent disturbance of the row of medicines 15 and toppling down of the rearmost medicine 15 due to vibration involved at the time of pushing-in operation.

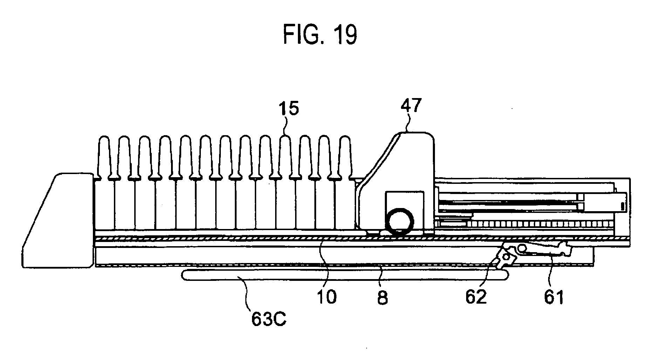

While the first unlocking pin A and the second unlocking pin 63B are separate members, the unlocking member of the present invention is not restricted to this construction, and it may also be formed by a single component formed of a thin and elongated bar. That is, as shown in Fig. 19, it may also be a flat unlocking bar 63C having a first unlocking end situated at the front side (drawing-out side) portion of the side plate 7 of the main body 3 and a second unlocking end situated at the rear side (pushing-in side) thereof. In this case, while the unlocking lever 62 is in contact with the unlocking bar 63C, the lock of the pressing member 47 is canceled, and a similar effect is obtained.

When the medicine cart 1 is not in use, the shutter 2 can be closed so that an unauthorized third party cannot take out the medicine 15, which provides safety. Moreover, it is desirable for the medicine cart 1 to be powered off by closing the shutter 2.

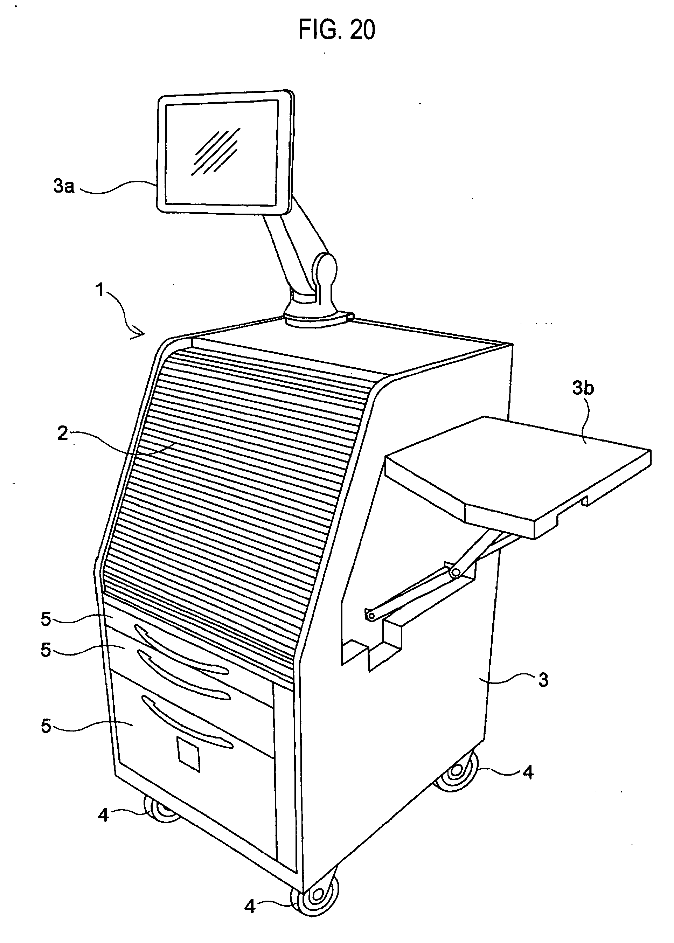

In the aforementioned embodiment, it is possible to adopt a construction in which, as shown in Fig. 20, a display panel 3a is provided on the top surface of the main body of the medicine cart 1 and in which an image of the taken-out medicines 15 and the name and number thereof are displayed on the displaypanel 3a, whereby it is possible to check the taken-out medicines against the display on the display panel. Further, it is also possible to provide an auxiliary shelf 3b on a side surface of the main body of the medicine cart 1 so as to be accommodated in the main body, and to use the auxiliary shelf as an operation stand on which the medicines 15 to be accommodated or the taken-out medicines 15 are temporarily placed.

### Brief Description of the Drawings

[Figs. 1] Part (a) is an elevation view of a medicine cart according to the present invention, and part (b) is a side sectional view thereof.
[Figs. 2] Part (a) is an elevation view of the medicine cart of Fig. 1 with a shutter closed, and part (b) is a side sectional view thereof.
[Fig. 3] A perspective view of a cassette.
[Fig. 4] A side view of the cassette.

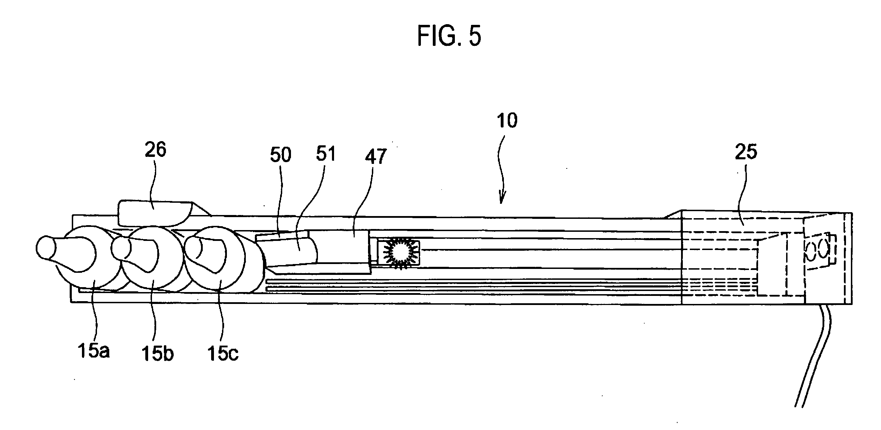

[Fig. 5] A diagram of the cassette as viewed from the above.
[Fig. 6] An elevation views of a pin and a pin receiver of the cassette.
[Fig. 7] A sectional view of the cassette.
[Fig. 8] A plan view of a slide resistance unit.
[Fig. 9] An exploded perspective view of the slide resistance unit of Fig. 8.
[Figs. 10] Part (a) is a sectional view of a pressing member, part (b) is a back view thereof, and part (c) is a plan view thereof.
[Fig. 11] A longitudinal sectional view of the cassette.
[Fig. 12] A circuit diagram of a measuring device using the slide resistance unit.
[Fig. 13] An enlarged side view of a pressing member provided with a locking means and an unlocking means.
[Fig. 14] A sectional view of Fig. 13.
[Fig. 15] A perspective view of the locking means and the unlocking means of Fig. 13.
[Fig. 16] A perspective view of a shelf plate, showing the positional relationship between the locking lever, a common spindle, an unlocking lever, and an unlocking pin of Fig. 13.
[Fig. 17] A side view sequentially showing an example of the operations of the locking means and the unlocking means.
[Fig. 18] A side view sequentially showing another example of the operations of the locking means and the unlocking means.
[Fig. 19] A side view showing another example of the unlocking means.
[Fig. 20] A perspective view of the medicine cart.

### Description of Reference Symbols

1 medicine cart, 8 shelf plate, 10 cassette, 15 medicines, 47 pressing member, 61 locking lever (locking means), 62 unlocking lever (locking means), 63 unlocking pin (locking means), 63A first unlocking pin (locking means), 63B second unlocking pins (locking means), 63C unlocking bar (locking means), 66 claw, 68 torsion spring

## Claims

1. A medicine cart comprising: a cassette which is upwardly open and accommodating a plurality of medicines in an upright state in a row; a shelf plate on which a plurality of the cassettes are placed and which can be drawn out of a main body of the medicine cart; and a pressing member provided in the cassette and adapted to forwardly press a rearmost medicine, wherein a locking means for locking the pressing member at a predetermined position in the cassette, and an unlocking means for canceling the lock of the pressing member by the locking means through pushing-in operation and drawing-out operation of the shelf plate are provided.

2. A medicine cart according to Claim 1, wherein the locking means comprises a locking lever rotatably provided on the cassette, and wherein the locking lever is provided with a claw to be locked to the pressing member, with the claw being biased in a direction to be locked to the pressing member.

3. A medicine cart according to Claim 2, wherein the locking lever of each cassette is fixed to a common spindle and rotatable around the common spindle.

4. A medicine cart according to Claim 2 or 3, wherein the unlocking means comprises an unlocking lever which is rotatably provided on the shelf plate and adapted to rotate the locking lever against a biasing force to cancel the engagement of the claw of the locking lever and the pressing member, and an unlocking member which is provided on the main body of the medicine cart and adapted to be locked to the unlocking lever of at least one cassette at the time of pushing-in and drawing-out of the shelf plate.

5. A medicine cart according to Claim 4, wherein the unlocking lever comprises an engagement portion to be engaged with the unlocking member and an operating portion abutting the locking lever to operate the locking lever.

6. A medicine cart according to Claim 5, wherein the engagement portion of the unlocking lever extends downwardly from the spindle of the unlocking lever, and wherein the operating portion extends horizontally on both sides from the spindle of the locking lever.

7. A medicine cart according to any one of Claims 4 through 6, wherein the unlocking member comprises a first unlocking member provided at a front side portion of the main body and a second unlocking member provided at a rear side portion of the main body.

8. A medicine cart according to any one of Claims 4 through 7, wherein the unlocking member comprises a pin.

9. A medicine cart according to any one of Claims 4 through 6, wherein the unlocking member comprises an unlocking bar having at both ends thereof a first unlocking end provided at a front side portion of the main body and a second unlocking end provided at a rear side portion of the main body.
